# EUROPÄISCHE PATENTANMELDUNG

(11) **EP 3 454 073 A1**
(43) Veröffentlichungstag der Anmeldung: **13.03.2019**
(21) Anmeldenummer: 17190184.6
(22) Anmeldetag: 08.09.2017
(51) Int. Cl.: G01S 5/02, G01S 5/14, G01S 13/87

(54) **SYSTEM UND VERFAHREN ZUR ORTUNG INNERHALB VON GEBÄUDEN**

(71) Anmelder: SPIE SAG GmbH, 63225 Langen (DE)
(72) Erfinder: OERTHER, Udo, 91224 Pommelsbrunn (DE)
(74) Vertreter: Kasseck, Christoph

(57) **Zusammenfassung**

Ein System zur Ortung innerhalb eines Gebäudes umfasst eine Mehrzahl an Ankerknoten und wenigstens einen mobilen Knoten. Die Ankerknoten sind an bzw. in einem Gebäude befestigbar, wobei die Ankerknoten und der mobile Knoten jeweils wenigstens eine UWB-Kommunikationseinheit aufweisen. Der mobile Knoten umfasst einen referenzortunabhängigen Bewegungssensor.

## Beschreibung

Die Erfindung betrifft ein System und ein Verfahren zur Ortung innerhalb eines Gebäudes mithilfe eines Ultrabreitband-(UWB-)Systems. UWB-Systeme zeichnen sich gegenüber der Positionserfassung mittels GPS durch ihre größere Zuverlässigkeit aus, da der Empfang der GPS-Daten von den Satelliten nicht immer gewährleistet ist. Auch lässt die Genauigkeit von nur einigen Metern sehr oft zu wünschen übrig. Dies gilt auch für das differenzielle GPS, welches mit Referenzantennen arbeitet und hierdurch die Genauigkeit auf unter 1 m verbessert. Deutlich genauer sind optische Messgeräte (insbesondere Laserentfernungsmessgeräte), doch scheitern diese bereits an im Wege stehenden Objekten, so dass es oft an Referenzflächen in Form von Wänden fehlt. Damit sind UWB-Systeme diesen beiden anderen Systemen innerhalb von Gebäuden überlegen.

Ein UWB-System zur Ortung innerhalb von Gebäuden ist aus Praxis und Literatur bekannt. US 2015/007282 A1 offenbart ein System zur Ortung von Einsatzkräften innerhalb eines Gebäudes. Das System umfasst eine Mehrzahl an Ankerknoten und wenigstens einen mobilen Knoten, wobei die Ankerknoten am Gebäude befestigbar sind. Sowohl die Ankerknoten als auch der mobile Knoten umfassen jeweils wenigstens eine UWB-Kommunikationseinheit, mittels derer die Position des mobilen Knotens bestimmbar ist. Dies geschieht über Zwei-Wege-Messungen von UWB-Signalen zwischen den mobilen Knoten und mehreren Ankerknoten, wodurch eine hohe Genauigkeit von etwa 2 cm erreicht wird.

Nachteilig an diesem bekannten Ortungssystem ist, dass es lediglich für eine verhältnismäßig kleine Anzahl an mobilen Knoten ausgelegt ist, welche etwa der Mannstärke einer Einsatzmannschaft entspricht. Mit Blick auf die beispielhafte Anwendung auf Messegeländen ist das bekannte UWB-System überfordert, da die mobilen Knoten insbesondere auch den Messebesuchern zwecks Orientierung zur Verfügung gestellt werden sollen. Demzufolge befinden sich in einer einzigen Messehalle Dutzende oder gar Hunderte an mobilen Knoten, welche laufend Positionsmessungen vornehmen und daher beständig UWB-Signale versenden und empfangen. In der Folge empfängt der einzelne mobile Knoten nicht nur die UWB-Signale der antwortenden Ankerknoten, sondern insbesondere auch zahlreiche, nicht für diesen mobilen Knoten vorgesehene Signale. Schließlich wird die Funkbelastung durch Reflexionen an den zahlreichen Oberflächen von Messeständen weiter erhöht. Diese hohe Funkbelastung resultiert in einem starken Rauschen, so dass die Signalstärke und damit auch die Messgenauigkeit verringert werden.

Aufgabe der vorliegenden Erfindung ist es daher, ein System bzw. ein Verfahren anzugeben, bei welchem der beschriebene Nachteil beseitigt wird. Insbesondere ist es Aufgabe der vorliegenden Erfindung, eine hohe Messgenauigkeit auch bei einer sehr großen Anzahl an mobilen Knoten zu gewährleisten. Dabei soll insbesondere eine Messgenauigkeit von unter 10 cm bei einer wenigstens zweistelligen und vorzugsweise wenigstens dreistelligen Anzahl an mobilen Knoten erreicht werden.

Zur Lösung dieser Aufgabe lehrt die Erfindung ein System zur Ortung innerhalb eines Gebäudes, insbesondere zur Positionierung von Messeständen, insbesondere zur Ortung nach dem nachfolgend noch erläuterten Verfahren, wobei das System eine Mehrzahl an Ankerknoten und wenigstens einen mobilen Knoten umfasst, wobei die Ankerknoten an bzw. in einem Gebäude befestigbar sind, wobei die Ankerknoten und der mobile Knoten jeweils eine UWB-Kommunikationseinheit aufweisen, wobei der mobile Knoten einen referenzortunabhängigen Bewegungssensor umfasst.

Der Ausdruck "referenzortunabhängig" meint insbesondere, dass der Bewegungssensor unabhängig von einem oder mehreren Referenzorten ist, so dass vom referenzortunabhängigen Bewegungssensor ausgegebene Werte an gleichem Ort unterschiedlich und an unterschiedlichen Orten gleich sein können. Insbesondere ist der referenzortunabhängige Bewegungssensor unabhängig von UWB-Kommunikationen bzw. von GPS. Der referenzortunabhängige Bewegungssensor ist vorzugsweise so ausgebildet, dass er eine oder mehrere Zustandsgrößen erfasst, welche lediglich auf den mobilen Knoten bezogen sind. Es ist bevorzugt, dass die vom referenzortunabhängigen Bewegungssensor ausgegebenen Signale unabhängig sind von Referenzorten bzw. Positionsdaten von Referenzorten.

Mit dem Kürzel "UWB" bzw. mit dem Ausdruck "Ultrabreitband" ist insbesondere das elektromagnetische Spektrum zwischen 30 MHz und 30 GHz, vorzugsweise das elektromagnetische Spektrum zwischen 500 MHz und 25 GHz sowie weiter vorzugsweise das elektromagnetische Spektrum zwischen 1,5 GHz und 11 GHz gemeint. Es ist bevorzugt, dass mit dem Ausdruck "Ultrabreitband" Bandbreiten von wenigstens 100 MHz, vorzugsweise von wenigstens 200 MHz und besonders vorzugsweise von wenigstens 400 MHz gemeint sind. Alternativ ist möglich, dass die Bandbreite wenigstens 10 %, vorzugsweise wenigstens 15 % und besonders vorzugsweise wenigstens 20 % des arithmetischen Mittelwertes von unterer und oberer Grenzfrequenz des genutzten Frequenzbandes entspricht.

Der Erfindung liegt die Erkenntnis zugrunde, dass mittels des Bewegungssensors eine Bewegung des mobilen Knotens festgestellt werden kann. In diesem Fall ist die Wahrscheinlichkeit sehr hoch, dass eine genaue Positionierung zu diesem Zeitpunkt nicht erforderlich ist. Dann kann die Zahl der für die Ortung verwendeten Positionsmessungen auf ein Minimum beschränkt werden. Auf diese Weise wird die Zahl der Positionsmessungen, etwa in einer Messehalle, deutlich verringert, wodurch sich auch die Funkbelastung verringert, so dass das Rauschen ebenfalls verringert und die Signalstärke sowie in der Folge auch die Messgenauigkeit entsprechend vergrößert werden.

Es ist bevorzugt, dass der mobile Knoten und/oder die Ankerknoten so ausgebildet sind, dass im Falle eines durch den Bewegungssensor ermittelten Stillstandes des mobilen Knotens der mobile Knoten bzw. die Ankerknoten - vorzugsweise automatisch - von einem groben Messmodus zu einem feinen Messmodus wechselt/wechseln. Es ist vorteilhaft, wenn der grobe Messmodus im Gegensatz zu dem feinen Messmodus hinsichtlich der Messungen der Position des mobilen Knotens auf eine voreingestellte Zahl an Ankerknoten beschränkt ist. Die voreingestellte Zahl an Ankerknoten beträgt zweckmäßigerweise höchstens fünf, vorzugsweise höchstens vier und besonders vorzugsweise genau drei Ankerknoten. Es ist möglich, dass der mobile Knoten und/oder die Ankerknoten so ausgebildet ist/sind, dass der mobile Knoten nur einzelne, nur eine Mehrzahl bestimmter oder alle in Reichweite befindlichen Ankerknoten adressieren kann. Es ist von Vorteil, dass im Falle des feinen Messmodus alle in der Reichweite des mobilen Knotens befindlichen Ankerknoten zu Positionsmessungen herangezogen werden, wobei vorzugsweise nur diejenigen in Reichweite des mobilen Knotens befindlichen Ankerknoten herangezogen werden, welche innerhalb des gleichen baulich definierten Bereiches befindlich sind wie der mobile Knoten. Baulich definierte Bereiche sind bevorzugt wenigstens abschnittsweise durch Wände voneinander getrennt, so dass dieser Ausdruck insbesondere eine Halle oder einen Raum meint.

Es ist bevorzugt, dass der referenzortunabhängige Bewegungssensor beispielsweise ein Beschleunigungssensor, ein Magnetometer oder ein Gyroskop sein kann und vorzugsweise ein Beschleunigungssensor ist. Es ist möglich, dass der mobile Knoten neben dem Beschleunigungssensor noch ein Magnetometer und/oder ein Gyroskop umfasst, um die Bewegungsempfindlichkeit zu erhöhen. Der Beschleunigungssensor ist zweckmäßigerweise ein Mikro-Elektro-Mechanisches System (MEMS) und umfasst vorzugsweise einen Siliziumsteg. Der Siliziumsteg ist zweckmäßigerweise auslenkbar und vorzugsweise gegenüber einer Bezugselektrode angeordnet, so dass sich eine elektrische Kapazität bei Auslenkung des Siliziumsteges verändert.

Es liegt im Rahmen der Erfindung, dass die Ankerknoten in einer Dichte verteilt sind, die wenigstens 0,05 Ankerknoten je 100 m², vorzugsweise wenigstens 0,1 Ankerknoten je 100 m² und besonders vorzugsweise wenigstens 0,15 Ankerknoten je 100 m² beträgt. Zweckmäßigerweise beträgt die Mehrzahl an Ankerknoten - insbesondere je Bereich - wenigstens drei und vorzugsweise wenigstens vier Ankerknoten. Die Ankerknoten sind vorzugsweise zu wenigstens 40 %, weiter vorzugsweise zu wenigstens 50 % und besonders vorzugsweise zu wenigstens 60 % an der Decke befestigt. Zweckmäßigerweise sind die Ankerknoten höchstens zu 60 %, vorteilhafterweise höchstens zu 50 % und weiter vorteilhafterweise höchstens zu 40 % an Wänden befestigt.

Es ist bevorzugt, dass das System eine Karte von wenigstens einem Abschnitt des Gebäudes umfasst, wobei die Karte auf einem vorgegebenen Datensatz beruht, wobei die Karte baulich stationäre Elemente und vorzugsweise baulich temporäre Elemente symbolisch darstellt. Der Begriff "vorgegeben" meint insbesondere nicht, dass baulich stationäre bzw. temporäre Elemente erst von den Ankerknoten erfasst werden müssen, um in der Karte dargestellt zu werden. Der Ausdruck "vorgegeben" meint insbesondere, dass der Datensatz der Karte vor Beginn eines Einsatzes des UWB-Systems festgelegt ist. Ein Einsatz kann beispielsweise eine Messe, eine Konferenz oder dergleichen sein. Zweckmäßigerweise bleiben die baulich stationären Elemente von Einsatz zu Einsatz identisch, wohingegen sich die baulich temporären Elemente von Einsatz zu Einsatz ändern. Baulich stationäre Elemente sind insbesondere Wände, Türen, Tore, Säulen und/oder Fenster, wohingegen es sich im Falle von baulich temporären Elementen beispielsweise um Messe- oder Verkaufsstände handelt.

Vorteilhafterweise umfasst der mobile Knoten eine UWB-Antenne, wobei die UWB-Antenne an einer Außenseite eines Gehäuses des mobilen Knotens angeordnet ist. Es ist bevorzugt, dass die UWB-Antenne des mobilen Knotens verschwenkbar ist, wozu die UWB-Antenne zweckmäßigerweise an einem Antennengelenk angeordnet ist. Das Antennengelenk ist bevorzugt an einer Außenseite des Gehäuses des mobilen Knotens befestigt. Vorzugsweise weist das Gehäuse des mobilen Knotens einen Schalter auf, mit welchem der mobile Knoten ein- bzw. ausgeschaltet werden kann. Zweckmäßigerweise umfasst der mobile Knoten eine Gleichspannungsquelle, beispielsweise Batterien oder einen wieder aufladbaren Akkumulator. Es ist bevorzugt, dass der mobile Knoten einen Drucksensor zwecks dreidimensionaler Messung aufweist. Vorteilhafterweise beträgt die Abweichung der vom Drucksensor gemessenen Drücke bei Raumtemperatur höchstens +/-0,24 hPa, vorzugsweise +/-0,12 hPa und besonders vorzugsweise höchstens +/-0,06hPa. Bevorzugt weist der mobile Knoten ein Gehäuse auf, wobei vorzugsweise das Gehäuse des mobilen Knotens Kunststoff umfasst bzw. im Wesentlichen aus Kunststoff gefertigt ist.

Es liegt im Rahmen der Erfindung, dass die UWB-Kommunikationseinheit in den Ankerknoten bzw. in dem mobilen Knoten dazu ausgebildet ist/sind, Laufzeitmessungen (insbes. Zwei-Wege-Laufzeitmessungen oder Ein-Weg-Laufzeitmessungen) durchzuführen. Im Falle der Laufzeitmessungen handelt es sich vorzugsweise um Zwei-Wege-Laufzeitmessungen. Zwei-Wege-Laufzeitmessungen sind bevorzugt dadurch gekennzeichnet, dass der mobile Knoten bzw. einige der Ankerknoten ein Signal aussenden, wobei die Ankerknoten bzw. der mobile Knoten auf das UWB-Signal antworten, so dass vorzugsweise die Zeitunterschiede der Antworten einen Rückschluss auf die jeweilige Entfernung zulassen. Ein-Weg-Laufzeitmessungen sind bevorzugt dadurch gekennzeichnet, dass einige der Ankerknoten zeitgleich ein UWB-Signal versenden. Der mobile Knoten ermittelt dann vorzugsweise anhand der Erfassung des zeitlichen Unterschiedes der Ankunft der verschiedenen UWB-Signale die Entfernungen zu den verschiedenen Ankerknoten, wodurch bevorzugt die Position des mobilen Knotens bestimmt wird. Sehr vorzugsweise sind die Ankerknoten bzw. der mobile Knoten so ausgebildet, dass sie Zwei-Wege-Laufzeitmessungen vornehmen können. Bevorzugt sendet und empfängt der mobile Knoten die UWB-Signale, wobei die Ankerknoten als Transponder ausgebildet sind. Es wurde gefunden, dass Zwei-Wege-Laufzeitmessungen eine größere Messgenauigkeit erreichen als Ein-Weg-Laufzeitmessungen, obwohl Zwei-Wege-Laufzeitmessungen aufgrund des Transponders in elektronischer und nachrichtentechnischer Hinsicht komplexer sind.

Es liegt im Rahmen der Erfindung, dass die UWB-Kommunikationseinheit in den Ankerknoten vom gleichen Typ ist wie die UWB-Kommunikationseinheit in dem mobilen Knoten. Es ist von Vorteil, dass die UWB-Kommunikationseinheit einen, bevorzugt variablen, Quarzoszillator und vorzugsweise einen spannungsgesteuerten variablen Quarzoszillator aufweist. Der Quarzoszillator ist vorzugsweise ein *on-chip*-Quarzoszillator. Der Quarzoszillator ist zweckmäßigerweise dazu ausgebildet, bei einer Frequenz von wenigstens 15 MHz, bevorzugt von wenigstens 25 MHz, besonders bevorzugt von wenigstens 30 MHz und ganz besonders bevorzugt von wenigstens 35 MHz betrieben zu werden. Die Frequenztoleranz des Quarzoszillators beträgt vorteilhafterweise höchstens +/-100 ppm, vorzugsweise höchstens +/-60 ppm und besonders vorzugsweise höchstens +/-40 ppm.

Der mobile Knoten und/oder die Ankerknoten weist bzw. weisen eine maximale Sendeleistung auf, welche höchstens -25 dBm/MHz, vorzugsweise höchstens -29 dBm/MHz und besonders vorzugsweise höchstens -32 dBm/MHz beträgt. Die Empfängerempfindlichkeit des mobilen Knotens und/oder der Ankerknoten ist, bei 25 °C und 20 Byte Nutzlast, bevorzugt empfindlicher als -90 dBm/500 MHz und vorzugsweise empfindlicher als -93 dBm/500 MHz. Vorteilhafterweise sind die Ankerknoten und/oder der mobile Knoten identifizierbar, z. B. anhand einer individuellen Nummer. Es ist bevorzugt, wenn die Ankerknoten und/oder der mobile Knoten so ausgebildet sind bzw. ist, dass eine Selbstüberprüfung stattfindet. Vorzugsweise wird ein im Rahmen der Selbstüberprüfung aufgefundener Fehler als Fehlermeldung an, vorzugsweise, einen Hauptrechner übermittelt.

Es ist besonders bevorzugt, wenn der mobile Knoten eine Schnittstelle für die Verbindung mit einem mobilen Endgerät aufweist. Dies ermöglicht die Darstellung der Position des mobilen Knotens in einer auf dem mobilen Endgerät dargestellten Karte. Die Schnittstelle mag kabelgebunden (z. B. USB) oder kabellos (z. B. WLAN) ausgebildet sein. Vorzugsweise ist die Schnittstelle kabellos ausgebildet und beispielsweise als NFC-, WLAN-, RFID oder Bluetooth-Schnittstelle ausgebildet. Die Schnittstelle ermöglicht die Darstellung der Positionen auf dem mobilen Endgerät, ohne dass das mobile Endgerät Zugang zu dem Mobilfunknetz haben muss.

Alternativ ist es möglich, dass die Positionen der mobilen Knoten von den mobilen Knoten an die Ankerknoten geleitet und von dort an einen Hauptrechner übertragen werden. Zweckmäßigerweise haben dann die Nutzer der mobilen Knoten die Möglichkeit, sich unter einem Konto an dem Hauptrechner anzumelden, um so, beispielsweise mittels Webportal, einen Zugang zu der Darstellung der Karte nebst Anzeige der Position des mobilen Knotens zu erhalten. Hierzu aber ist eine hohe Zuverlässigkeit des Mobilfunknetzes zu gewährleisten, was gerade im Falle von Messen und Konferenzen oft nicht der Fall ist. Es ist möglich, dass die Schnittstelle bzw. eine zusätzliche Schnittstelle dazu ausgebildet ist, elektrischen Strom von dem mobilen Endgerät auf den mobilen Knoten zu übertragen, um die Verfügbarkeit des mobilen Knotens zu erhöhen.

Es liegt im Rahmen der Erfindung, dass das System einen Hauptrechner aufweist, wobei der Hauptrechner bevorzugt mit den Ankerknoten verbunden ist. Zweckmäßigerweise ist der Hauptrechner lediglich unter Zwischenschaltung der Ankerknoten mit dem mobilen Knoten verbunden. Die Ankerknoten sind bevorzugt Teile eines Netzwerkes, wobei das Netzwerk zweckmäßigerweise Bestandteil des Systems ist. Das Netzwerk umfasst vorzugsweise ein Netzwerkgerät, beispielsweise einen Switch, sowie - z. B. - LAN- und/oder WLAN-Verbindungen zwischen dem Netzwerkgerät und den Ankerknoten. Bevorzugt sind Ethernet-Kabel zwischen den Ankerknoten und dem Netzwerkgerät angeordnet.

Es ist bevorzugt, dass die Ankerknoten jeweils mit dem Stromnetz verbunden sind. Gemäß einer vorteilhaften Ausführungsform weisen die Ankerknoten jeweils einen Rechner auf, wobei der Rechner vorzugsweise dazu ausgebildet ist, eine Verbindung zwischen den Ankerknoten und dem Netzwerkgerät herzustellen. Zweckmäßigerweise umfasst der Rechner ein Spannungsnetzgerät zwecks Energieversorgung. Der Ausdruck "Rechner" meint insbesondere, dass neben Speicher und Prozessor außerdem Steckbuchsen für standardisierte Steckverbindungen vorgesehen sind. Der Rechner ist bevorzugt ein Miniaturrechner und besonders bevorzugt ein Einplatinenrechner. Im Falle des Rechners handelt es sich beispielsweise um einen Raspberry Pi. Zweckmäßigerweise umfassen die Ankerknoten jeweils ein Gehäuse sowie vorteilhafterweise jeweils eine UWB-Antenne. Es ist bevorzugt, dass die UWB-Antenne und/oder die UWB-Kommunikationseinheit und/oder der Rechner innerhalb des Gehäuses des Ankerknotens befindlich ist/sind.

Zur Lösung der Aufgabe lehrt die Erfindung auch ein Verfahren zur Ortung innerhalb eines Gebäudes, insbesondere zur Positionierung von Messeständen, wobei ein System zur Ortung innerhalb eines Gebäudes bereitgestellt wird, insbesondere ein System wie zuvor erfindungsgemäß beschrieben, wobei das System eine Mehrzahl an Ankerknoten und wenigstens einen mobilen Knoten umfasst, wobei die Ankerknoten an bzw. in einem Gebäude befestigbar sind, wobei die Ankerknoten und der mobile Knoten jeweils wenigstens eine UWB-Kommunikationseinheit umfassen, wobei der mobile Knoten mit einem mobilen Endgerät kommuniziert, wobei eine Karte von wenigstens einem Abschnitt des Gebäudes auf dem mobilen Endgerät dargestellt wird, wobei die Position des mobilen Knotens in der Karte angezeigt wird, wobei die Karte auf einem vorgegebenen Datensatz beruht, wobei die Karte baulich stationäre Elemente und vorzugsweise baulich temporäre Elemente symbolisch darstellt.

Besonders vorzugsweise umfasst das Gebäude mehrere baulich definierte Bereiche, wobei jedem Bereich eine vorbestimmte Anzahl an Ankerknoten zugeordnet ist, wobei alle Ankerknoten innerhalb der Reichweite des mobilen Knotens - insbesondere auch diejenigen Ankerknoten aus einem oder mehreren Bereichen, in denen sich der mobile Knoten nicht befindet - auf den mobilen Knoten reagieren. Der Ausdruck "vorbestimmt" meint insbesondere, dass ein Plan existiert, nach welchem eine Zuordnung von Ankerknoten und Bereichen festgelegt ist, wobei zweckmäßigerweise festgelegt ist, wie viele und welche Ankerknoten sich in welchem Bereich befinden. Vorteilhafterweise ist jedem Bereich eine Liste an Ankerknoten zugeordnet. Der Plan betreffend die Zuordnung von Ankerknoten und Bereichen ist vorzugsweise in der Hinsicht vorbestimmt, dass bereits vor jedem Einsatz feststeht, welcher Ankerknoten zu welchem Bereich zugeordnet ist und insbesondere an welcher Position sich der jeweilige Ankerknoten befindet.

Gemäß einer ganz besonders bevorzugten Ausführungsform wird über erste Messungen eine erste Ortung des mobilen Knotens vorgenommen, wobei anhand der ersten Ortung derjenige Bereich ermittelt wird, in dem sich der mobile Knoten befindet. Vorzugsweise werden für die erste Ortung die UWB-Signale aller in Reichweite des mobilen Knotens befindlichen Ankerknoten für die erste Ortung herangezogen. Hierbei handelt es sich vorzugsweise um eine grobe Ortung, weil die Entfernungsmessungen der außerhalb des Bereiches liegenden Ankerknoten verzerrt sind. Es ist besonders bevorzugt, dass der Bereich, in dem sich der mobile Knoten befindet, anhand eines Abgleiches ermittelt wird zwischen dem vorgegebenen Datensatz, insbesondere umfassend die Position von Wänden, und zwischen der ersten Ortung.

Sehr vorteilhafterweise werden diejenigen Ankerknoten von einer zweiten Ortung des mobilen Knotens ausgeschlossen, welche zwar innerhalb der Reichweite des mobilen Knotens, aber außerhalb des Bereiches, in dem sich der mobile Knoten befindet, liegen. Zweckmäßigerweise wird ein Abgleich einer Liste von Ankerknoten aus dem ermittelten Bereich mit einer Liste der in Reichweite liegenden Ankerknoten vorgenommen, wobei vorzugsweise nur diejenigen Ankerknoten zur zweiten Ortung herangezogen werden, welche die Schnittmenge beider Listen bilden. Es ist bevorzugt, dass eine zweite Ortung des mobilen Knotens nur mithilfe derjenigen Ankerknoten durchgeführt wird, die sich in demselben Bereich wie der mobile Knoten befinden.

Gemäß einer sehr bevorzugten Ausführungsform weist der mobile Knoten einen referenzortunabhängigen Bewegungssensor auf, wobei bevorzugt ist, dass im Falle eines durch den Bewegungssensor ermittelten Stillstandes des mobilen Knotens der mobile Knoten bzw. die Ankerknoten von einem groben Messmodus zu einem feinen Messmodus wechselt/wechseln. Es ist bevorzugt, dass der grobe Messmodus im Gegensatz zu dem feinen Messmodus hinsichtlich der Messung der Position des mobilen Knotens auf eine voreingestellte Zahl an Ankerknoten beschränkt ist. Die voreingestellte Zahl beträgt höchstens fünf und weiter vorzugsweise höchstens vier Ankerknoten, wobei die Ankerknoten zweckmäßigerweise in dem gleichen Bereich wie der mobile Knoten befindlich sind.

Vorzugsweise wird wenigstens eine Linie in der Karte angezeigt, wobei die Linie einen abschreitbaren bzw. abzuschreitenden Weg anzeigt. Die Linie ist z. B. eine Grundflächenkante eines temporären baulichen Elementes, beispielsweise eines Messestandes, oder eine Führungslinie bis zu einem Ziel. Es ist bevorzugt, dass zwischen den Ankerknoten und dem mobilen Knoten mittels Frequenzspreizung entstört werden. Für die Frequenzspreizung kommen beispielsweise die Verfahren des *Direct Sequence Spread Spectrum,* des *Frequency Hopping Spread Spectrum* oder des *Chip Spread Spectrum* infrage.

Nachfolgend wird die Erfindung anhand einer ein Ausführungsbeispiel darstellenden Zeichnung näher erläutert. Es zeigen in schematischer Darstellung:
- Fig. 1: einen vereinfachten Grundriss einer Messehalle mit einer entsprechenden Verteilung von Ankerknoten,
- Fig. 2A: einen erfindungsgemäßen Ankerknoten in Blockdarstellung und
- Fig. 2B: einen erfindungsgemäßen mobilen Knoten in Blockdarstellung.

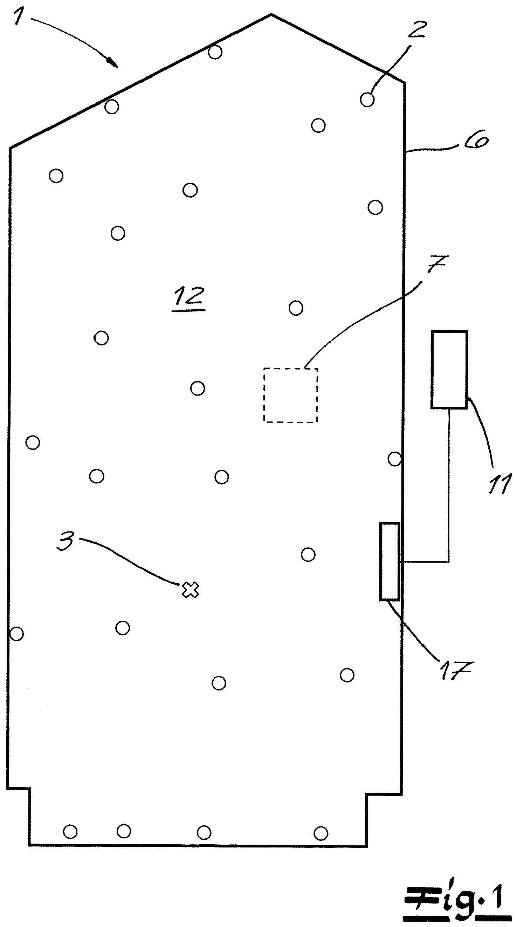

In Fig. 1 sind die wesentlichen Bestandteile des erfindungsgemäßen Systems zur Ortung innerhalb eines Gebäudes 1 dargestellt. In diesem Ausführungsbeispiel handelt es sich im Falle des Gebäudes 1 um ein Messegelände mit mehreren Bereichen 12 in Form von Messehallen. Der in Fig. 1 abgebildete Bereich 12 wird durch baulich stationäre Elemente 6 in Form von Wänden begrenzt und umfasst knapp 12.000 m², wobei sich die Decke in etwa 6 m Höhe befindet. Während einer Messe befinden sich in dem Bereich 12 zahlreiche baulich temporäre Elemente 7 in Form von Messe- bzw. Verkaufsständen.

Das Gebäude 1 weist im vorliegenden Ausführungsbeispiel weitere, jedoch nicht dargestellte Bereiche auf, welche allesamt mit dem erfindungsgemäßen System versehen sind. Das System umfasst ausweislich Fig. 1 insbesondere 24 Ankerknoten 2 in dem Bereich 12, welche an den baulich stationären Elementen 6 angeordnet sind. Die Mehrzahl der Ankerknoten 2 wurde an der Decke befestigt, wohingegen etwa ein Drittel der Ankerknoten 2 an den Wänden angebracht wurden. Die Ankerknoten 2 wurden weitgehend gleichmäßig über die Fläche des Bereiches 12 verteilt, so dass eine Dichte von etwa 0,2 Ankerknoten je 100 m² erreicht wurde. Die Ankerknoten 2 sind in diesem Ausführungsbeispiel an das Spannungsnetz angeschlossen und über Ethernet-Kabel sternförmig mit einem Netzwerkgerät 17 in Form eines Switches verbunden. Das Netzwerkgerät 17 ist mit einem Hauptrechner 11 verbunden, wobei der Hauptrechner seinerseits noch mit anderen Netzwerkgeräten aus anderen Bereichen wiederum sternförmig verbunden ist. In Fig. 1 ist schließlich noch ein mobiler Knoten 3 symbolisch dargestellt. Während einer Messe oder Konferenz ist in dem Bereich 12 oft eine große Zahl an mobilen Knoten 3 befindlich.

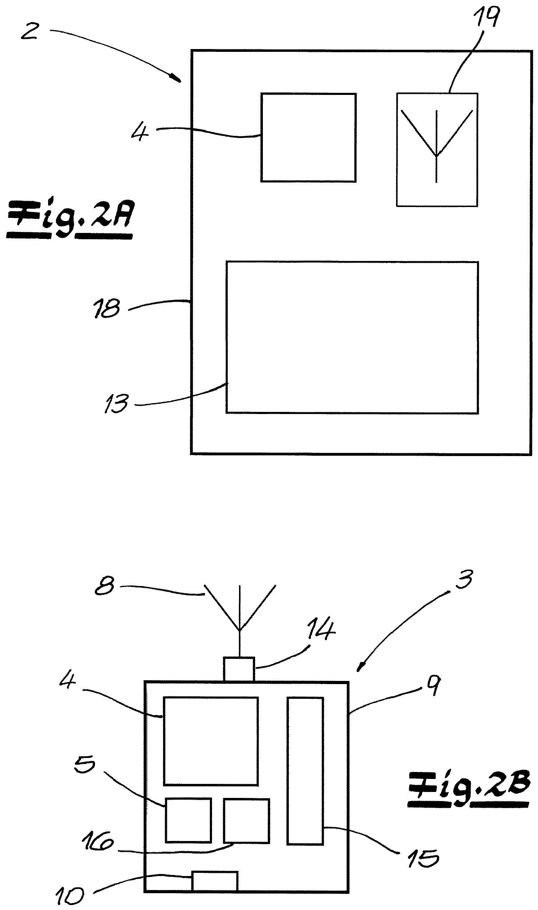

In Fig. 2A ist ein Ankerknoten 2 schematisch als Blockschaubild dargestellt. Der Ankerknoten 2 weist ein Gehäuse 18 auf, in welchem sich eine UWB-Kommunikationseinheit 4 sowie eine UWB-Antenne 19 befinden. Ferner umschließt das Gehäuse 18 einen Rechner 13, welcher neben Speicher und Prozessor noch mehrere standardisierte Steckbuchsen umfasst. Der Rechner ist als Einplatinenrechner ausgebildet, wobei im vorliegenden Ausführungsbeispiel ein Raspberry Pi 3, Modell B verwendet wird. Der Rechner 13 umfasst insbesondere eine Steckbuchse zur Verbindung mit einem Ethernet-Kabel, so dass eine kabelgebundene Verbindung mit dem Netzwerkgerät 17 hergestellt werden kann. Das Gehäuse 18 des Ankerknotens 2 weist vorzugsweise Verbindungselemente zwecks Verbindung mit Deckenelementen oder Wandelementen auf.

In Fig. 2B ist ein mobiler Knoten 3 abgebildet, welcher ein Kunststoffgehäuse 9 aufweist. Das Kunststoffgehäuse 9 umschließt eine UWB-Kommunikationseinheit 4, eine Gleichspannungsquelle 15 in Form eines Akkumulators, einen referenzortunabhängigen Bewegungssensor 5, einen Drucksensor 16 sowie eine Schnittstelle 10 zur Verbindung mit einem mobilen Endgerät. Vorzugsweise ist an dem Gehäuse 9 des mobilen Knotens 3 noch ein hier nicht dargestellter Schalter angebracht, mit welchem der mobile Knoten 3 ein- und ausgeschaltet werden kann. An einer Außenseite des Gehäuses 9 des mobilen Knotens 3 ist ein Antennengelenk 14 angeordnet, so dass eine UWB-Antenne 8 zwecks Empfangsoptimierung verschwenkt werden kann.

Im vorliegenden Ausführungsbeispiel sind die UWB-Kommunikationseinheiten 4 so ausgebildet, dass sie Zwei-Wege-Laufzeitmessungen vornehmen. Dies bedeutet, dass der mobile Knoten 3 fortlaufend aussendet, welche von den Ankerknoten 2 empfangen und mit Antwortsignalen beantwortet werden. In diesem Sinne arbeiten die Ankerknoten 2 als Transponder. Anhand der verschiedenen Zeitpunkte der eintreffenden UWB-Antwortsignale kann der mobile Knoten 3 dann seine Position berechnen. Dabei werden für jede Positionsberechnung mindestens drei Ankerknoten herangezogen, um die Position des mobilen Knotens 3 im Raum eindeutig zu bestimmen.

Dabei ist jedoch festzustellen, dass eine einmalige Auswertung der Antworten von drei Ankerknoten zumeist keine Messgenauigkeit im Bereich von wenigen cm hervorbringt. Aus diesem Grunde werden für genaue Ortsbestimmungen die Laufzeitmessungen wiederholt. Ebenso kann die Genauigkeit der Positionsbestimmung erhöht werden, wenn eine möglichst große Anzahl von in Reichweite des mobilen Knotens 3 befindlichen Ankerknoten 2 ausgenutzt wird. Folglich kann eine geringe Anzahl von Positionsbestimmungswiederholungen durch eine hohe Anzahl an Ankerknoten 2 ausgeglichen werden und umgekehrt.

In diesem Ausführungsbeispiel sind die mobilen Knoten 3 mit der Schnittstelle 10 für die Verbindung mit mobilen Endgeräten ausgestattet, was eine unmittelbare Kommunikation zwischen den mobilen Knoten 3 und den mobilen Endgeräten erlaubt. Wenn zusätzlich noch ein Programm bzw. eine App umfassend eine Karte des Bereiches 12 auf das mobile Endgerät aufgespielt wird, so kann zugleich neben der angezeigten Karte auch noch die Position des mobilen Knotens 3 und damit die Position des Nutzers in der Karte auf dem mobilen Endgerät dargestellt werden. Damit ist dieses System völlig unabhängig von mobilen Funknetzen und dementsprechend zuverlässig.

Aufgrund der zahlreichen sich in dem Bereich 12 befindlichen mobilen Knoten 3 zum Zeitpunkt einer Messe oder Konferenz ist die Funkbelastung sehr hoch, so dass ein starker UWB-Rauschuntergrund vorliegt. Aus diesem Grunde weisen die mobilen Knoten 3 jeweils den referenzortunabhängigen Bewegungssensor 5 auf. Sobald der Bewegungssensor 5 eine Bewegung erfasst, beispielsweise verursacht durch ein Gehen seines Trägers, so wird automatisch der grobe Messmodus aktiviert. Im Falle des groben Messmodus werden nur wenige Laufzeitmessungen durchgeführt, so dass die Positionsbestimmung entsprechend ungenau ist, was aber aufgrund der Bewegungen ohnehin unkritisch ist. Ganz besonders aber wird durch den groben Messmodus die Funkbelastung im Bereich 12 verringert, so dass das UWB-Untergrundrauschen ebenfalls verringert und in der Folge die Signalqualität insgesamt verbessert wird.

Erfasst der Bewegungssensor 5 hingegen einen Stillstand des mobilen Knotens 3, so wird automatisch der feine Messmodus aktiviert. Dann werden für die Positionsbestimmungen verhältnismäßig viele Laufzeitmessungen herangezogen, so dass die Positionsbestimmung entsprechend präziser wird. Dies ist beispielsweise im Falle der Positionierung von Messestandsflächen von besonderer Bedeutung. Hier kommt es auf eine hohe Genauigkeit im Bereich von Zentimetern an, damit die Messestandsflächen exakt wie geplant ausgenutzt werden können. Beispielsweise läuft der Nutzer mit seinem mobilen Endgerät und dem mobilen Knoten 3 bis zu einem Eckpunkt der Messestandsfläche, kommt dort zum Stehen und bewegt den mobilen Knoten 3 nur noch ganz langsam, um so den feinen Messmodus zu aktivieren. Auch ist es möglich, den mobilen Knoten 3 auf den Boden zu legen, um gleich nach präziser Ortung des Eckpunktes die entsprechende Stelle am Boden - beispielsweise mit einem Klebeband - zu markieren. Auf diese Weise können die Eckpunkte bis auf wenige Zentimeter genau bestimmt werden, so dass für die Messestandspositionierung ein größtmögliches Maß an Genauigkeit erreicht wird.

## Patentansprüche

1. System zur Ortung innerhalb eines Gebäudes (1), insbesondere zur Positionierung von Messeständen, insbesondere zur Ortung nach einem Verfahren gemäß einem der Ansprüche 10 bis 15, wobei das System eine Mehrzahl an Ankerknoten (2) und wenigstens einen mobilen Knoten (3) umfasst, wobei die Ankerknoten (2) an bzw. in einem Gebäude (1) befestigbar sind, wobei die Ankerknoten (2) und der mobile Knoten (3) jeweils wenigstens eine UWB-Kommunikationseinheit (4) umfassen,
**dadurch gekennzeichnet, dass**
der mobile Knoten (3) einen referenzortunabhängigen Bewegungssensor (5) umfasst.

2. System nach Anspruch 1, wobei der mobile Knoten (3) und/oder die Ankerknoten (2) so ausgebildet sind, dass im Falle eines durch den Bewegungssensor (5) ermittelten Stillstandes des mobilen Knotens (3) der mobile Knoten (3) bzw. die Ankerknoten (2) von einem groben Messmodus zu einem feinen Messmodus wechselt/wechseln.

3. System nach Anspruch 1 oder 2, wobei der referenzortunabhängige Bewegungssensor (5) beispielsweise ein Beschleunigungssensor, ein Magnetometer oder ein Gyroskop sein kann und vorzugsweise ein Beschleunigungssensor ist.

4. System nach einem der Ansprüche 1 bis 3, wobei die Ankerknoten (2) in einer Dichte verteilt sind, die wenigstens 0,05 Ankerknoten je 100m², vorzugsweise wenigstens 0,1 Ankerknoten je 100m² und besonders vorzugsweise wenigstens 0,15 Ankerknoten je 100m² beträgt.

5. System nach einem der Ansprüche 1 bis 4, wobei das System eine Karte von wenigstens einem Abschnitt des Gebäudes (1) umfasst, wobei die Karte auf einem vorgegebenen Datensatz beruht, wobei die Karte baulich stationäre Elemente (6) und vorzugsweise baulich temporäre Elemente (7) symbolisch darstellt.

6. System nach einem der Ansprüche 1 bis 5, wobei der mobile Knoten (3) eine UWB-Antenne (8) aufweist, wobei vorzugsweise die UWB-Antenne (8) an einer Außenseite eines Gehäuses (9) des mobilen Knotens (3) angeordnet ist.

7. System nach einem der Ansprüche 1 bis 6, wobei die UWB-Kommunikationseinheit (4) in den Ankerknoten (2) und/oder die UWB-Kommunikationseinheit (4) in dem mobilen Knoten (3) dazu ausgebildet ist/sind, Laufzeitmessungen durchzuführen.

8. System nach einem der Ansprüche 1 bis 7, wobei der mobile Knoten (3) eine Schnittstelle (10) für die Verbindung mit einem mobilen Endgerät aufweist.

9. System nach einem der Ansprüche 1 bis 8, wobei das System einen Hauptrechner (11) aufweist, wobei der Hauptrechner (11) bevorzugt mit den Ankerknoten (2) verbunden ist.

10. Verfahren zur Ortung innerhalb eines Gebäudes (1), insbesondere zur Positionierung von Messeständen, wobei ein System zur Ortung innerhalb eines Gebäudes (1) bereitgestellt wird, insbesondere ein System gemäß einem der Ansprüche 1 bis 9, wobei das System eine Mehrzahl an Ankerknoten (2) und wenigstens einen mobilen Knoten (3) umfasst, wobei die Ankerknoten (2) an bzw. in einem Gebäude (1) befestigbar sind, wobei die Ankerknoten (2) und der mobile Knoten (3) jeweils wenigstens eine UWB-Kommunikationseinheit (4) umfassen, wobei der mobile Knoten (3) mit einem mobilen Endgerät kommuniziert, wobei eine Karte von wenigstens einem Abschnitt des Gebäudes (1) auf dem mobilen Endgerät dargestellt wird, wobei die Position des mobilen Knotens (3) in der Karte angezeigt wird,
**dadurch gekennzeichnet, dass**
die Karte auf einem vorgegebenen Datensatz beruht, wobei die Karte baulich stationäre Elemente (6) und vorzugsweise baulich temporäre Elemente (7) symbolisch darstellt.

11. Verfahren nach Anspruch 10, wobei das Gebäude (1) mehrere baulich definierte Bereiche (12) umfasst, wobei jedem Bereich (12) eine vorbestimmte Anzahl an Ankerknoten (2) zugeordnet ist, wobei alle Ankerknoten (2) innerhalb der Reichweite des mobilen Knotens (3) - insbesondere auch diejenigen Ankerknoten (2) aus einem oder mehreren Bereichen (12), in denen sich der mobile Knoten (3) nicht befindet - auf den mobilen Knoten (3) reagieren.

12. Verfahren nach Anspruch 11, wobei über erste Messungen eine erste Ortung des mobilen Knotens (13) vorgenommen wird, wobei anhand der ersten Ortung der Bereich (12) ermittelt wird, in dem sich der mobile Knoten (3) befindet.

13. Verfahren nach Anspruch 12, wobei diejenigen Ankerknoten (2) von einer zweiten Ortung des mobilen Knotens (3) ausgeschlossen werden, welche zwar innerhalb der Reichweite des mobilen Knotens (3), aber außerhalb des Bereiches (12), in dem sich der mobile Knoten (3) befindet, liegen.

14. Verfahren nach einem der Ansprüche 10 bis 13, wobei der mobile Knoten (3) einen referenzortunabhängigen Bewegungssensor (5) aufweist, wobei bevorzugt ist, dass im Falle eines durch den Bewegungssensor (5) ermittelten Stillstandes des mobilen Knotens (3) der mobile Knoten (3) bzw. die Ankerknoten (2) von einem groben Messmodus zu einem feinen Messmodus wechselt/wechseln.

15. Verfahren nach Anspruch 14, wobei der grobe Messmodus im Gegensatz zu dem feinen Messmodus hinsichtlich der Messungen der Position des mobilen Knotens (3) auf eine voreingestellte Zahl an Ankerknoten (2) beschränkt ist.
